# EUROPÄISCHE PATENTSCHRIFT

(11) **EP 2 536 479 B1**
(45) Veröffentlichungstag und Bekanntmachung des Hinweises auf die Patenterteilung: **16.03.2016**
(21) Anmeldenummer: 10798797.6
(22) Anmeldetag: 21.12.2010
(51) Int. Cl.: B01D 53/02, B01D 53/04

(54) **VERFAHREN ZUR ADSORPTION VON AEROSOLEN UND GERUCHSEMISSIONEN AUS DER REIFENVULKANISATION UND MISCHUNGSHERSTELLUNG**
PROCESS FOR ADSORPTION OF AEROSOLS AND ODOR EMISSIONS FROM TIRE VULCANIZATION AND BLEND PRODUCTION
PROCÉDÉ POUR L'ADSORPTION D'AÉROSOLS ET D'ÉMISSIONS D'ODEURS, PROVENANT DE LA VULCANISATION DE PNEUMATIQUES ET DE LA FABRICATION DE MÉLANGES

(30) Priorität: 18.02.2010 DE 102010000456
(43) Veröffentlichungstag der Anmeldung: 26.12.2012
(73) Patentinhaber: Continental Reifen Deutschland GmbH, 30165 Hannover (DE)
(72) Erfinder: THEUSNER, Martin, 30989 Gehrden (DE)
(74) Vertreter: Widjaja, Wira
(86) Internationale Anmeldenummer: PCT/EP2010/070341
(87) Internationale Veröffentlichungsnummer: WO 2011/101059

(56) Entgegenhaltungen:
- US-A- 4 764 282
- US-A- 5 236 597

## Beschreibung

Die Erfindung betrifft ein Verfahren zur Adsorption von Aerosolen und Geruchsemissionen aus der Reifenvulkanisation an Reifenrohstoffen als Adsorbens und deren Einsatz als Mischungsbestandteil in Reifenmischungen. Eine Entsorgung wird überflüssig. Eine Umweltbelastung (Grundwasser) durch Deponierung oder der Atmosphäre durch Verbrennung kann ausgeschlossen werden. Weiterhin kann eine Geruchsbelästigung der Umgebung wird vermeiden.

In der Reifenindustrie entstehen in Wesentlichen sowohl bei der Vulkanisation der Reifen in Reifenvulkanisationsformen als auch bei der Mischungsherstellung bei Temperaturen im Bereich von 150° - 200 °C Aerosole (und Geruchsemissionen), die sich in Form von blauen Dämpfen zeigen. Diese Aerosole entstehen aus Inhaltsstoffen der Reifenrezepturen (z.B. Alterungsschutzmittel, Öle, Beschleuniger, u.s.w) die sich bei diesem Temperaturen entweder unzersetzt oder als Bruchstücke in die Atmosphäre verflüchtigen. Bei diesen entweichenden Verbindungen handelt es sich um Mischungsinhaltsstoffe die in der gesamten Mischungsmatrix des Reifens vorhanden sind. Sie sind also originärer Bestandteil eines Reifens.

Werden diese Vulkanisationsemissionen zur Verbesserung der Hallenluft abgesaugt, kondensieren diese an den Innenwänden der Abluftrohre und führen zu einer mit der Zeit starken Verunreinigung der Abluftrohre. Das Kondensat kann aus Rohrverbindungen und Revisionsklappen als schwarze hochviskose und klebrige Masse heraustreten. Eine Reinigung der Abluftrohre ist häufig nur mit großem technischem Aufwand möglich.

Die US 4764282 und US5236597 offenbaren herkömmliche Verfahren zum Behandeln von Emissionen.

Der Erfindung lag die Aufgabe zugrunde, ein Verfahren bereitzustellen, mit dem aus den Vulkanisationsemissionen effektiv die Aerosole und Geruchsemissionen aus der Abluft getrennt werden und eine Entsorgung des mit Aerosolen beladene Adsorbens entfällt.

Gelöst wird die Aufgabe durch ein Verfahren nach Anspruch 1.

Ein Vorteil der Erfindung ist insbesondere darin zu sehen, dass durch das erfindungsgemäße Verfahren das Problem gelöst wird, daß Abluftrohre vor stark anhaftenden Kondensaten von Aerosolen der emittierten Verbindungen verunreinigt werden. Außerdem wird mit dem Reinigen der Abluft in der Trockenfilterabsauganlage erreicht, dass die Vulkanisationsemissionen ungefiltert in die Umwelt gelangen. Dadurch werden entsprechende Geruchsemissionen, die ggf. in der Nähe von Reifenfabriken auftreten, effektiv unterbunden.

Als Mischungsbestandteile zum Aufbau eines Adsorptionsfilterkuchens werden pulverförmige, geperlte oder granulierte Reifenrohstoffe verwendet. Nach dem Abreinigen des Trockenfilters kann dieser Filterkuchen in kleinen Teilen den Mischungsrezepten wieder zugesetzt werden. Diese Anteile haben keinen negativen Einfluss auf das physikalische Niveau der Mischungen, da es sich grundsätzlich um Reifenmischungsbestandteile handelt.

Dadurch wird eine Entsorgung des Filterkuchens aus den Absauganlagen als Sonderabfall überflüssig, da als eingeblasene Stäube zum Aufbau des Filterkuchens Mischungsinhaltsstoffe d.h. Reifenmischungsbestandteile von Reifenmischungen eingesetzt werden. Nach Erreichen des Abreinigungszustandes des mit emittierten Aerosolen und sonstigen Reifenemissionen beladenen Filterkuchens kann dieser wieder in definierter Menge in Reifenmischungen zurückgeführt werden.
Eine Entsorgung oder Verbrennung des Filterkuchens als Sonderabfall wegen des Vorhandenseins von chemischen Verbindungen in dem Filterkuchen entfällt.

In einer vorteilhaften Weiterbildung der Erfindung ist vorgesehen, dass die pulverförmigen, geperlten oder granulierten Reifenrohstoffe Kieselsäure (Siliziumdioxid), organisch modifizierte Kieselsäure, Zinkoxid, Talkum oder in der Reifenindustrie eingesetzte Rußtypen oder sonstige Reifenrohstoffe umfassen. Die pulverförmigen Reifenrohstoffe eignen sich besonders zum Einsatz als Adsordens. Die Aerosole werden effektiv mit diesen Reifenrohstoffen adsorbiert und somit aus der Abluft gefiltert.

In einer weiteren vorteilhaften Weiterbildung der Erfindung ist vorgesehen, dass die Adsorption der Aerosole die bei einer Prozesstemperatur von 150 bis 210 ° C entstehen, vorzugsweise ca. 200 ° C, bei Umgebungstemperatur erfolgt.
Bei dieser Temperatur lassen sich die Aerosole optimal mit den pulverförmigen Reifenrohstoffen adsorbieren.

In einer weiteren vorteilhaften Weiterbildung der Erfindung ist vorgesehen, dass das diskontinuierliche Abführen des beladenenen Filteradsorpens aus der Trockenfilterabsauganlage mit einem Abrüttelverfahren von dem Filtervlies erfolgt. Auf diese Weise lässt sich das beladene Filteradsorbens effektiv von dem Filtervlies trennen. Diese Trennung ist erforderlich um das Filtervlies anschließend wieder mit unbeladenen Filteradsorbens zu versehen.

In einer weiteren vorteilhaften Weiterbildung der Erfindung ist vorgesehen, dass die saubere und geruchsfreie Luft nach der Trockenfilterabsauganlage einem Wärmetauscher zugeführt wird, der durch nun nicht mehr durch Aerosole verunreinigt wird und damit der Wärmeübergang deutlich verbessert wird. Eine Reinigung der Wärmetauscher wird durch die saubere Abluft überflüssig. Reinigungsmittel und Energie wird eingespart. Die mit dem Wärmetauscher gewonnene Energie kann beispielsweise wieder zur Erwärmung der Frischluft für die Produktionsbereiche eingesetzt werden, wodurch eine erhebliche Energieeinsparung erfolgt.

In einer weiteren vorteilhaften Weiterbildung der Erfindung ist vorgesehen, dass die Vulkanisationsemissionen mit einem haubenförmigen Absaugsystem abgesaugt und anschließend der Trockenfilterabsauganlage zugeführt werden.
Auf diese Weise werden die Vulkanisationsemissionen effektiv aus der Halle mit den Vulkanisationspressen abgesaugt.

In einer weiteren vorteilhaften Weiterbildung der Erfindung ist vorgesehen, dass das haubenförmige Absaugsystem direkt über der Vulkanisationspresse angeordnet ist. Die größte Ansammlung der Vulkanisationsemissionen befindet sich direkt über den jeweiligen Vulkanisationspressen. Durch die Anordnung des haubenförmigen Absaugsystems direkt über der Vulkanisationspresse wird verhindert, dass die Vulkanisationspressen ungehindert in die Halle emittieren.

In einer weiteren vorteilhaften Weiterbildung der Erfindung ist vorgesehen, dass nach dem Abführen des beladenen Filteradsorbens, neue pulverförmige Reifenrohstoffe als Adsorbens der Trockenfilterabsauganlage zugeführt werden, wobei das Filtervlies anschließend mit diesem neuen pulverförmigen Reifenrohstoffen als Adsorbens versehen wird.

Dadurch wird in regelmäßigen Abständen das Filtervlies immer wieder mit unbeladenen Filteradsorbens versehen, damit die Vulkanisationsemissionen effektiv von den Aerosolen getrennt werden.

An einem Ausführungsbeispiel soll die Erfindung nachfolgend erläutert werden. Es zeigen:
- Fig. 1:: eine schematische Darstellung des Verfahrens,
- Fig. 2:: eine schematische Darstellung des Verfahrens mit einer Schnittansicht der Trockenfilterabsauganlage.

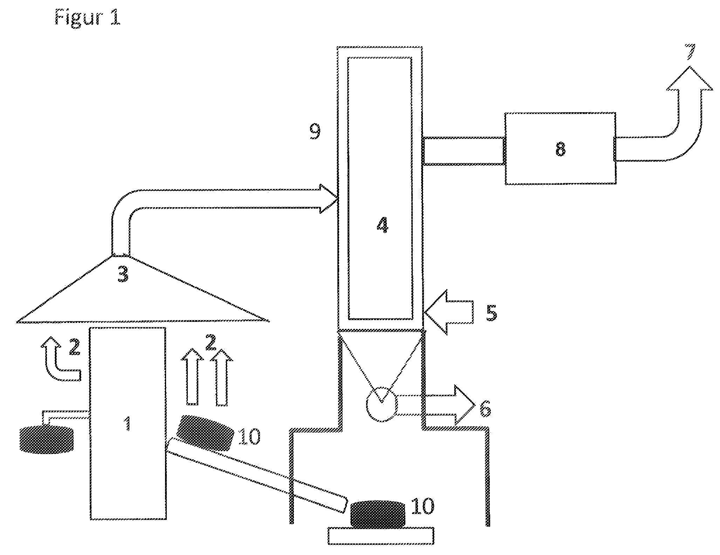

Die Fig. 1 zeigt eine schematische Darstellung des erfindungsgemäßen Verfahrens. In der schematisch dargestellten Vulkanisationspresse 1 werden diskontinuierlich einzelne Fahrzeugreifen 10 nacheinander vulkanisiert. Bei diesem Vulkanisationsprozess werden Vulkanisationsemissionen 2 freigesetzt, die in die Umgebungsluft emittieren. Über der Vulkanisationspresse 1 ist das haubenförmige Absaugsystem 3 angeordnet. Über dieses Absaugsystem 3 werden die Vulkanisationsemissionen der Trockenfilterabsauganlage 9 zugeführt. Die Vulkanisationsemissionen 2 werden in dem Trockenfilter 4 entsprechend gereinigt. In diesem Trockenfilter 4 ist das Filtervlies mit den Filteradsorbens angeordnet. Die Aerosole werden an dem Filteradsorbens adsorbiert. Die gereinigte Luft tritt hinter dem Filtervlies aus und wird anschließend einem Wärmetauscher 8 zugeführt. Danach wird die gereinigte Luft 7 aus der Halle mit den Vulkanisationspressen herausgeführt. Das Adsorbens wird vorzugsweise von oben dem Trockenfilter diskontinuierlich zugeführt. Der Filterkuchen im Trockenfilter 4 wird in regelmäßigen Abständen von dem Filtervlies getrennt. Nach einer entsprechenden Trennung erfolgt ein Abführen 6 des beladenen Filteradsorbens aus der Trockenfilterabsauganlage 9.

Statt der Vulkanisationsemissionen kann mit dem Verfahren auch die Abluft aus der Mischungsherstellung von Gummimischungen gereinigt werden. Daher sind die Vulkanisationsemissionen in diesem Fall mit den Emissionen gleichzusetzen, die bei der Mischungsherstellung von Gummimischungen anfallen.

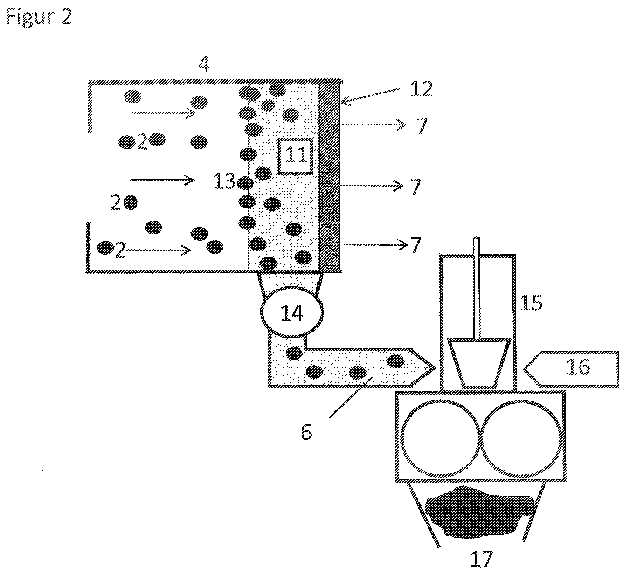

Die Fig. 2 zeigt eine schematische Darstellung des Verfahrens, bei der insbesondere der Prozess im Trockenfilter 4 dargestellt ist. Die Figur zeigt im Wesentlichen eine Schnittansicht durch den Trockenfilter 4 mit dem Filtervlies 12 und dem darauf angeordneten Filterkuchen 11 mit Adsorbens aus pulverförmigen Reifenrohstoffen. Die Vulkanisationsemissionen 2 mit den entsprechenden Aerosolen und Geruchsemissionen 13 werden gegen den Filterkuchen 11 geblasen und von diesen entsprechend adsorbiert. Unterhalb des Trockenfilters 4 ist ein Förderwerkzeug 14 angeordnet, welches den beladenen Filterkuchen bzw. Filteradsorbens aus dem Trockenfilter herausfördert. Die gereinigte Luft 7 tritt hinter dem Filtervlies 12 aus dem Trockenfilter 4 aus. Mit dem Förderwerkzeug 14 erfolgt das Abführen 6 des beladenen Filteradsorbens. Dieses beladene Filteradsorbens wird anschließend einem Mischer 15 für die Herstellung von Reifenmischungen in kleinen Mengen zugeführt. Dem Mischer 15 werden im Wesentlichen konventionelle Reifenrohstoffe zugeführt. Die mit dem Mischer 15 hergestellte fertige Reifenmischung 17 entspricht im Wesentlichen konventionellen Reifenmischungen, da das beladene Filteradsorbens nur in sehr kleinen Mengen dem Mischprozess zugeführt wird.

Das unbeladene Filteradsorbens in Form von pulverförmigen Reifenrohstoffen wird vorzugsweise von oben in den Trockenfilter 4 gegeben, wie in der Figur 1 dargestellt ist.

Das pulverförmige Adsorbens 5 wird in den Trockenfilter 4 eingeblasen und so ein Filterkuchen 11 aufgebaut. An bzw. in diesen Filterkuchen 11 von einigen Millimetern bis Zentimetern Dicke werden die Aerosole und Geruchemissionen adsorptiv zurückgehalten und können so nicht mehr in die Umwelt oder weitere nachgeschaltete Abluftnachbehandlungsschritte gelangen. Durch Messung des Strömungswiderstandes oder des Druckaufbaues im Filtervlies 12 wird die Filterbelegung ermittelt. Ist der Luftdurchsatz nicht mehr ausreichend, wird der Filtervlies 12 abgereinigt. Dieses geschieht durch Abrütteln oder durch Pressluftstöße von der Außenseite gegen die Filterflächen des Filtervlies 12. Der mit Aerosolen beladene Filterkuchen 11 löst sich von den Filterwänden, fällt herab und wird durch geeignete Verfahren, z.B. mit dem Förderwerkzeug 14, aus dem Trockenfilter 4 herausbefördert.

### Bezugszeichenliste

- 1: Vulkanisationspresse
- 2: Vulkanisationsemissionen
- 3: Haubenförmiges Absaugsystem
- 4: Trockenfilter
- 5: Zuführung von Adsorbens
- 6: Abführen des beladenen Filteradsorbens
- 7: Gereinigte Luft
- 8: Wärmetauscher
- 9: Trockenfilterabsauganlage
- 10: Vulkanisierter Fahrzeugreifen
- 11: Filterkuchen mit Adsorbens aus pulverförmigen Reifenrohstoffen
- 12: Filtervlies
- 13: Aerosole und Geruchsemissionen
- 14: Förderwerkzeug
- 15: Mischer für Herstellung einer Reifenmischung
- 16: Zuführung von konventionellen Reifenrohstoffen
- 17: Fertige Reifenmischung

## Patentansprüche

1. Verfahren zur Adsorption von Aerosolen und Geruchsemissionen (13) aus der Reifenvulkanisation mit folgenden Schritten:
- Absaugen von Vulkanisationsemissionen (2) mit einer Trockenfilterabsauganlage (9), wobei die Vulkanisationsemissionen (2) bei der Reifenvulkanisation von Fahrzeugreifen (10) anfallen,
- Adsorption der Aerosole und Geruchsemissionen (13) aus der Reifenvulkanisation mit einem in der Trockenfilterabsauganlage (9) angeordneten Filterkuchen (11), wobei der Filterkuchen (11) pulverförmige, geperlte oder granulierte Reifenrohstoffe als Adsorbens für Aerosole (13) umfasst und auf einem Filtervlies (12) angeordnet ist,
- Abführen von sauberer, geruchsfreier Luft (7) hinter dem Filtervlies (12) aus der Trockenfilterabsauganlage (9),
- diskontinuierliches Abführen des beladenen Filteradsorbens (6) aus der Trockenfilterabsauganlage (9),
- Wiederverwertung des beladenen Filteradsorbens (6) indem das Filteradsorbens in kleinen Mengen als Reifenmischungsrohstoff wieder verwendet wird, wozu das Filteradsorbens (6) einem Mischer (15) für die Herstellung von Reifenmischungen (17) zugeführt wird,
- Entnahme der fertigen Reifenmischung (17) aus dem Mischer (15) und Verwertung der Reifenmischung (17) für die Reifenherstellung.

2. Verfahren nach Anspruch 1,
**dadurch gekennzeichnet, dass**
die pulverförmigen, geperlten oder granulierten Reifenrohstoffe Kieselsäure (Siliciumdioxid), organisch modifizierte Kieselsäure, Zinkoxid, Talkum oder in der Reifenindustrie eingesetzte Rußtypen umfassen.

3. Verfahren nach einem der vorhergehenden Ansprüche,
**dadurch gekennzeichnet, dass**
die Adsorption der Aerosole, die bei einer Prozesstemperatur von 150 bis 210 ° C entstehen, bei Umgebungstemperatur erfolgt.

4. Verfahren nach einem der vorhergehenden Ansprüche,
**dadurch gekennzeichnet, dass**
das diskontinuierliche Abführen des beladenen Filteradsorbens (6) aus der Trockenfilterabsauganlage (9) mit einem Abrüttelverfahren von dem Filtervlies (12) erfolgt.

5. Verfahren nach einem der vorhergehenden Ansprüche,
**dadurch gekennzeichnet, dass**
die saubere und geruchsfreie Luft (7) nach der Trockenfilterabsauganlage (9) einem Wärmetauscher (8) zugeführt wird.

6. Verfahren nach einem der vorhergehenden Ansprüche,
**dadurch gekennzeichnet, dass**
die Vulkanisationsemissionen (2) mit einem haubenförmigen Absaugsystem (3) abgesaugt und anschließend der Trockenfilterabsauganlage (9) zugeführt werden.

7. Verfahren nach einem der vorhergehenden Ansprüche,
**dadurch gekennzeichnet, dass**
das haubenförmige Absaugsystem (3) direkt über der Vulkanisationspresse (1) angeordnet ist.

8. Verfahren nach einem der vorhergehenden Ansprüche,
**dadurch gekennzeichnet, dass**
nach dem Abführen des beladenen Filteradsorbens (6), neue pulverförmige, geperlte oder granulierte Reifenrohstoffe als Adsorbens der Trockenfilterabsauganlage (9) zugeführt werden, wobei das Filtervlies (12) anschließend mit diesem neuen pulverförmigen, geperlten oder granulierten Reifenrohstoffen als Adsorbens versehen wird.

## Claims

1. Process for the adsorption of aerosols and odour emissions (13) from tyre vulcanization comprising the following steps:
- extracting vulcanization emissions (2) with a dry filter extraction installation (9), the vulcanization emissions (2) occurring in the vulcanization of vehicle tyres (10),
- adsorbing the aerosols and odour emissions (13) from the tyre vulcanization with a filter cake (11) arranged within the dry filter extraction installation (9), the filter cake (11) comprising pulverulent, pelletized or granulated tyre raw materials as an adsorbent for aerosols (13) and being arranged on a filter nonwoven (12),
- carrying away clean, odourless air (7) from the dry filter extraction installation (9) behind the filter nonwoven (12),
- discontinuously carrying away the laden filter adsorbent (6) from the dry filter extraction installation (9),
- reusing the laden filter adsorbent (6) by the filter adsorbent being reused in small amounts as a tyre blend raw material, for which purpose the filter adsorbent (6) is fed to a mixer (15) for the preparation of tyre blends (17),
- removing the finished tyre blend (17) from the mixer (15) and utilizing the tyre blend (17) for tyre production.

2. Method according to Claim 1,
**characterized in that**
the pulverulent, pelletized or granulated tyre raw materials comprise silica (silicon dioxide), organically modified silica, zinc oxide, talc or types of carbon black that are used in the tyre industry.

3. Method according to one of the preceding claims, **characterized in that**
the adsorption of the aerosols, which are produced at a process temperature of 150 to 210°C, takes place at ambient temperature.

4. Method according to one of the preceding claims,
**characterized in that**
the discontinuous carrying away of the laden filter adsorbent (6) from the dry filter extraction installation (9) takes place by a process of shaking off from the filter nonwoven (12).

5. Method according to one of the preceding claims,
**characterized in that**
the clean, odourless air (7) is fed to a heat exchanger (8) after the dry filter extraction installation (9).

6. Method according to one of the preceding claims,
**characterized in that**
the vulcanization emissions (2) are extracted by an extraction system (3) in the form of a hood and are subsequently fed to the dry filter extraction installation (9).

7. Method according to one of the preceding claims,
**characterized in that**
the extraction system (3) in the form of a hood is arranged directly over the vulcanization press (1).

8. Method according to one of the preceding claims,
**characterized in that**
after the carrying away of the laden filter adsorbent (6), new pulverulent, pelletized or granulated tyre raw materials are fed to the dry filter extraction installation (9) as an adsorbent, the filter nonwoven (12) subsequently being provided with these new pulverulent, pelletized or granulated tyre raw materials as an adsorbent.

## Revendications

1. Procédé pour l'adsorption d'aérosols et d'émissions d'odeurs (13) provenant de la vulcanisation de pneumatiques, comprenant les étapes suivantes:
- aspiration d'émissions de vulcanisation (2) avec une installation d'aspiration à filtre sec (9), dans lequel les émissions de vulcanisation (2) se produisent lors de la vulcanisation de pneumatiques de véhicules (10),
- adsorption des aérosols et des émissions d'odeurs (13) provenant de la vulcanisation de pneumatiques avec un gâteau de filtre (11) disposé dans l'installation d'aspiration à filtre sec (9), dans lequel le gâteau de filtre (11) comprend des matières premières pour pneumatiques pulvérulentes, perlées ou granulées, comme adsorbant pour les aérosols (13) et est disposé sur un filtre non-tissé (12),
- évacuation de l'air propre sans odeurs (7) après le filtre non-tissé (12) hors de l'installation d'aspiration à filtre sec (9),
- évacuation discontinue de l'adsorbant de filtre chargé (6) hors de l'installation d'aspiration à filtre sec (9),
- réutilisation de l'adsorbant de filtre chargé (6) en utilisant de nouveau l'adsorbant de filtre en petites quantités comme matière première pour le mélange pour pneumatiques, pour laquelle l'adsorbant de filtre (6) est envoyé à un mélangeur (15) pour la fabrication de mélanges pour pneumatiques (17),
- enlèvement du mélange pour pneumatiques terminé (17) hors du mélangeur (15) et valorisation du mélange pour pneumatiques (17) pour la fabrication de pneumatiques.

2. Procédé selon la revendication 1, **caractérisé en ce que** les matières premières pour pneumatiques pulvérulentes, perlées ou granulées comprennent de l'acide silicique (dioxyde de silicium), de l'acide silicique organiquement modifié, de l'oxyde de zinc, du talc ou des types de suies utilisés dans l'industrie des pneumatiques.

3. Procédé selon l'une quelconque des revendications précédentes, **caractérisé en ce que** l'adsorption des aérosols, qui se forment à une température de traitement de 150 à 210°C, est effectuée à la température ambiante.

4. Procédé selon l'une quelconque des revendications précédentes, **caractérisé en ce que** l'évacuation discontinue de l'adsorbant de filtre chargé (6) hors de l'installation d'aspiration à filtre sec (9) est effectuée avec un procédé à secousses à partir du filtre non-tissé (12).

5. Procédé selon l'une quelconque des revendications précédentes, **caractérisé en ce que** l'air propre et sans odeurs (7) après l'installation d'aspiration à filtre sec (9) est envoyé à un échangeur de chaleur (8).

6. Procédé selon l'une quelconque des revendications précédentes, **caractérisé en ce que** les émissions de vulcanisation (2) sont aspirées avec un système d'aspiration (3) en forme de hotte et envoyées ensuite à l'installation d'aspiration à filtre sec (9).

7. Procédé selon l'une quelconque des revendications précédentes, **caractérisé en ce que** le système d'aspiration en forme de hotte (3) est disposé directement au-dessus de la presse de vulcanisation (1) .

8. Procédé selon l'une quelconque des revendications précédentes, **caractérisé en ce qu'**après l'évacuation de l'adsorbant de filtre chargé (6), de nouvelles matières premières pulvérulentes, perlées ou granulées sont envoyées comme adsorbant à l'installation d'aspiration à filtre sec (9), dans lequel le filtre non-tissé (12) est ensuite garni de ces nouvelles matières premières pulvérulentes, perlées ou granulées en qualité d'adsorbant.
